# EUROPEAN PATENT SPECIFICATION

(11) **EP 2 364 344 B1**
(45) Date of publication and mention of the grant of the patent: **02.09.2015**
(21) Application number: 09827240.4
(22) Date of filing: 23.11.2009
(51) Int. Cl.: C10J 3/04, C10J 3/38, C10J 3/26, C10J 3/72, C10J 3/74, C10J 3/42, C10J 3/32

(54) **CO-CURRENT GASIFIER**
GLEICHSTROMVERGASER
RÉACTEURS DE GAZÉIFICATION À CO-COURANT

(30) Priority: 24.11.2008 FI 20086121
(43) Date of publication of application: 14.09.2011
(73) Proprietor: Gasek OY, 85900 Reisjärvi (FI)
(72) Inventor: KANGASOJA, Eero, FI-85470 Kiiskilampi (FI)
(74) Representative: Berggren Oy Ab
(86) International application number: PCT/FI2009/050949
(87) International publication number: WO 2010/058089

(56) References cited:
- WO-A1-2008/145814
- WO-A1-2008/145814
- DE-A1- 10 200 180
- GB-A- 696 682
- JP-A- 2006 131 727
- US-A- 1 524 466
- US-A- 3 902 872
- US-A- 4 405 340
- US-A- 4 643 739

## Description

The invention relates to a co-current gasifier, which has a fuel silo for storing the fuel to be gasified, an upper floor forming the bottom of the fuel silo, at least one gasification compartment beneath the upper floor for gasifying the fuel and means for conducting gasification air into the gasification compartment.

Combustible product gas can be manufactured from solid fuels, such as wood chips, by various gasification methods. Gasifiers can according to their principle of operation be divided into fixed layer gasifiers, counter-current gasifiers, cross-drought gasifiers and co-current gasifiers. The gasifier used in co-current gasification comprises a vertical reactor, in which the fuel gasification takes place. The fuel is fed to the upper part of the reactor, from which it flows downwards by gravity. The air required in gasification is fed to the central part of the reactor, and the generated product gas exits from the lower part of the reactor.

Cited reference DE 10200180 presents a wood gasifier, which has a cylindrical fuel storage. In the lower part of the fuel storage there is a conical oxidation chamber, where pyrolysis occurs. Beneath the oxidation chamber there is a combustion chamber. Around the oxidation chamber is a chamber, which forms a ring-like air channel around the oxidation chamber. Combustion air is blown into the air channel with the aid of a blower, whereby it is warmed up before it is transferred into the oxidation chamber.

Cited reference GB 240226 A presents a gasifier solution, which has a fuel silo and underneath it two combustion chambers within each other; a central combustion chamber and a ring-like outer combustion chamber surrounding it. The main part of the gas formation takes place in the central combustion chamber. The pur-pose of the outer combustion chamber is mostly to function as a fuel dryer.

Documents US 3902872 and US 4405340 disclose a co-current gasifier, which has a fuel silo for storing fuel to be gasified, an upper floor forming the bottom of the fuel silo and a gasification compartment beneath the upper floor for gasifying the fuel. The upper floor has holes for conducting the fuel from the fuel silo to the gasification compartment. The upper floor is arranged to rotate about a vertical axis.

There are many drawbacks related to prior art co-current gasifiers. The fuel used in gasifiers should be as dry as possible. In spite of the use of dry fuel, the product gas manufactured with the prior art methods contains a considerable amount of impurities and tar compounds. Because of the purification problems, product gas is nowadays used almost exclusively for the production of thermal energy by burning the product gas. The amount of product gas produced by the co-current gasifier is limited, which makes it difficult to utilize gasifiers in larger power plants. The gasifier is also sensitive to malfunctions, since when the fire in the combustion chamber goes out the operation of the entire gasifier stops.

It is an objective of the invention to provide a co-current gasifier, by which the drawbacks and disadvantages relating to the prior art can be substantially reduced.

The objects of the invention are achieved with a co-current gasifier, which is characterized by what is presented in the independent claim. Some advantageous embodiments of the invention are presented in the dependent claims.

The co-current gasifier according to the invention has a fuel silo for storing the fuel to be gasified, such as the wood chips. The gasifier has an upper floor, which forms the bottom of the fuel silo. Underneath the upper floor there is at least one gasification compartment for gasifying the fuel. The gasifier further has means for conducting the gasification air needed for the gasification of the fuel into the gasification compartment. The basic idea of the invention is that the upper floor has several holes for conducting the fuel from the fuel silo into the gasification compartment/gasification compartments. In the co-current gasifier according to the invention the gasification of the fuel takes place in a small area between the lower part of the fuel silo and the upper part of the gasification compartment. The gasifier has several holes leading from the fuel silo to the gasification compartment/compartments, gasification of the fuel takes place in several places, which increases the amount of generated product gas.

A preferred embodiment of the co-current gasifier according to the invention comprises at least two gasification compartments separate from each other, and the upper floor has one hole leading from the fuel silo to the gasification compartment for each gasification compartment. Advantageously the co-current gasifier comprises three, four, five or six gasification compartments, which are situated in a ring-like manner beneath the upper floor, preferably inside the circle limited by the wall of the fuel silo.

In another preferred embodiment of the co-current gasifier according to the invention, there is a ring-like cooling channel between each gasification compartment and the upper floor, and the gasification air is arranged to be conducted through the cooling channel to the gasification compartment. In the gasifier according to the invention the heat generated in the gasification compartment cannot transfer in an unobstructed manner to the fuel silo, but a substantial part of it is bound to the gasification air flowing through the cooling channel, whereby the heating of the fuel is prevented. This ensures that the fuel does not dry in the fuel silo and the pyrolysis cannot start when the fuel is still in the fuel silo. In the co-current gasifier according to the invention the starting of the pyrolysis is intentionally moved as close to the gasification phase as possible and the aim is to make the pyrolysis phase as short as possible. The gasification of the fuel thus happens in a clearly different way than in known gasifiers, where the aim is to dry the fuel while it is in the fuel silo and where the pyrolysis of the fuel starts already in the fuel silo.

A fourth preferred embodiment of the co-current gasifier according to the invention further comprises a fuel distributor or catcher fitted into the fuel silo for dispensing the fuel from the fuel silo through the holes into the gasification compartments. Preferably said fuel distributor is shaped as a conical part, which has a wing, and the fuel distributor is installed on top of the upper floor and attached with the aid of a support axis to the upper floor to rotate around its longitudinal axis.

A fifth preferred embodiment of the co-current gasifier according to the invention comprises a lower floor beneath the upper floor. In this embodiment there is only one gasification compartment, which is situated beneath the lower floor. The upper and the lower floor has several concentric holes leading from the fuel silo to the gasification compartment.

In a sixth preferred embodiment of the co-current gasifier according to the invention, there is a cooling space between the upper and the lower floor, and the gasification air is arranged to be conducted through the cooling space to the gasification compartment. Thus a significant part of the heat generated in the gasification compartment is bound to the gasification air flowing through the cooling space, whereby the heating of the fuel is prevented.

A seventh preferred embodiment of the co-current gasifier according to the invention further has a cooling cone fitted into the fuel silo and at least one inlet channel leading from outside the gasifier to inside the cooling cone. Between the cooling cone and the cooling space there is at least one outlet hole for conducting the gasification air from outside the gasifier through the cooling cone into the cooling space. Preferably the inlet channel is between the upper floor and the lower floor.

In an eighth preferred embodiment of the co-current gasifier according to the invention the gasification compartment has a combustion chamber, which has a triple wall structure, which comprises an internal jacket, an intermediate jacket and an external jacket.

An advantage of the invention is that it sets only little requirements on the dampness or the composition of the fuel to be used. As fuel in the gasifier can be used relatively damp, air-dried (moisture percent 30-40 percent by weight) pine, birch, fir or other kinds of wood chipped with the bark on, and biowaste.

An advantage of the invention is additionally that very little tar is generated in the gasification, wherefore the need for purification of the product gas is small. The low tar content also enables burning the generated product gas in functionally delicate devices, such as engines of vehicles.

A further advantage of the invention is that the amount of product gas it produces is large, which improves the use possibilities of the gasifier in large power plants.

Still a further advantage of the invention is that it is functionally reliable, since the gasifier has several combustion chambers, which function independently from each other.

In the following, the invention will be described in detail. In the description, reference is made to the appended drawings, in which
Fig. 1 a shows as an example a co-current gasifier according to the invention as a vertical cross-section,
Fig. 1b shows the co-current gasifier of Fig. 1 a as a horizontal cross-section,
Fig. 1c shows the gasification compartment of the co-current gasifier of Figs. 1 a and 1 b as a vertical cross-section,
Fig. 1d and 1e show the gasification compartment of the co-current gasifier of Figs. 1 a and 1 b as horizontal cross-sections,
Fig. 2a shows as an example a preferred embodiment of a co-current gasifier according to the invention as a vertical cross-section and
Fig. 2b shows the embodiment shown in Fig. 2a as a horizontal cross-section.

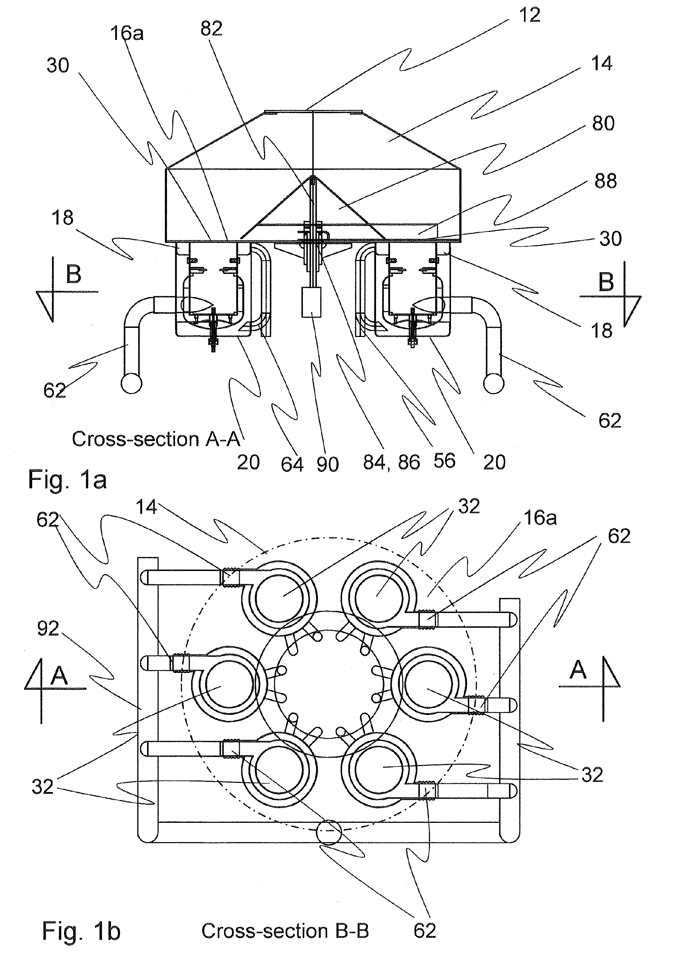

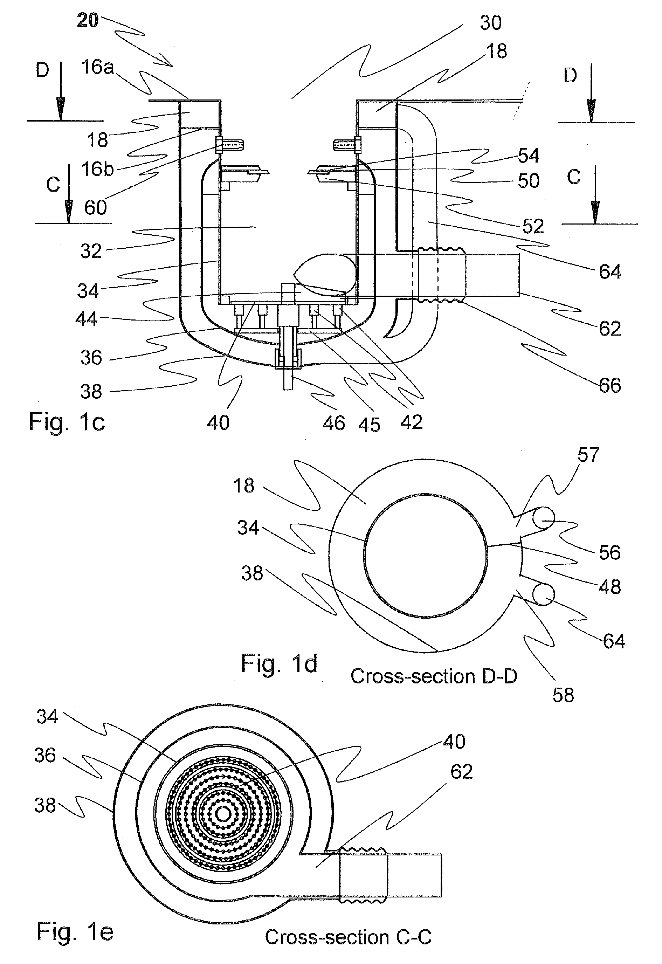

Figures 1 a and 1 b show as an example a co-current gasifier according to the invention. Figure 1a shows the co-current gasifier as a vertical cross-section cut along sectional plane A-A and Figure 1b as a horizontal cross-section cut along sectional plane B-B.

The gasifier has a plate-like upper floor 16a, above which there is a fuel silo 14, which at its lower end is cylindrical and at its upper end is conically narrowing. At the top end of the fuel silo there is a feeding opening for putting in the fuel. As a cover on the feeding opening there is a lid 12, which can be closed in an airtight manner. The fuel silo is attached at its lower end in a fixed manner to the upper floor 16a, preferably by welding.

Inside the fuel silo 14 there is a conically shaped fuel distributor 80. The fuel distributor is on the top surface of the upper floor, so that its tip points toward the feeding opening of the fuel silo. The fuel distributor further includes a plate-like wing 88, the lower edge of which settles against the top surface of the upper floor. The wing attaches at its first end to the outer surface of the conical part of the fuel distributor and its second end extends close to the wall of the fuel silo. Through the hole 84 in the middle of the upper floor 16a passes a support axis 82, which attaches at its upwards pointing first end in a fixed manner to the conical tip of the fuel distributor. Around the hole there are bearings 86, which enable the rotating of the support axis in the hole around its longitudinal axis. The second end of the support axis 82 extends beneath the upper floor 16a and it is connected to the actuator 90, which rotates the support axis. By using the actuator the support axis 82 and the fuel distributor 80 can be set in a rotating motion.

On the edge zone of the upper floor 16a there are through-holes 30. The holes are situated symmetrically in the shape of a ring around the fuel distributor 80, so that they remain within the circle limited by the wall on the fuel silo 14 (Fig. 1b). By each hole beneath the upper floor there is one gasification compartment 20 of the co-current gasifier. In the embodiment shown in Figs. 1 a and 1 b there are six gasification compartments, but there can also be another number of them, for example 2, 3, 4, 5, 7, 8, 9, 10 or more than ten of them.

At the top part of each gasification compartment there is a ring-like cooling channel 18, so that the upper floor 16a forms the wall towards the fuel silo of the cooling channel. The gasification air flows into the cooling channel through the inlet pipe 56 and the inlet opening 57 in the wall of the cooling channel and exits from there through the outlet opening 58 after it has circulated around the entire channel (Fig. 1d). From the outlet opening the gasification air flows along the air pipe 64 to the preheating space of the gasification compartment. The product gas pipes 62 exiting the gasification compartments are connected to one collecting pipe system 92, with the aid of which the product gas generated in all the gasification compartments is collected for further use.

Fig. 1c shows as an example the gasification compartment 20 of a co-current gasifier according to the invention as vertical cross-sections and Figs. 1d and 1e as horizontal cross-sections cut along sectional planes C-C and D-D. The gasification compartment of the co-current gasifier is in a use situation in the vertical position according to Fig. 1 c. In the following, when expressions describing directions, such as upwards, downwards, above, beneath, on the top surface or on the lower surface, are used in the descriptions of the figures, the directions are meant when the gasifier is in the position shown in the figure in question. If the gasifier is in some other position than the one according to the figure, the expressions describing directions change accordingly.

The gasification compartment 20 is attached to the lower surface of the upper floor 16a. Beneath the upper floor there is a lower floor 16b, whereby the upper and the lower floor delimit between them a ring-shaped cooling channel 18, through which the gasification air needed for gasifying the fuel is conducted into the gasifier. The cylindrical external jacket 38 of the gasification compartment forms the outer wall of the cooling channel and the internal jacket 34 of the combustion chamber 32 of the gasifier forms the inner wall of the cooling channel. In the part above the cooling channel 18 there are means for storing the fuel and for feeding it into the gasification compartment. In a use situation the cooling channel 18 between the fuel silo and the combustion chamber functions as a structural part, which reduces the transfer of heat from the combustion chamber to the fuel silo.

The upper and the lower floor 16a, 16b, the external jacket 38 and the internal jacket 34 form the walls of the ring-like cooling channel. Inside the cooling channel there is a baffle plate 48 (Fig. 1d), which closes the channel entirely at one point. On the first side of the baffle plate in the external jacket there is an inlet opening 57 connecting to the inlet pipe 56, through which inlet opening the gasification air can flow into the cooling channel, and on the second side of the baffle plate there is an outlet opening 58, from which air can flow out from the cooling channel into the air pipe 64. The gasification air thus circulates an substantially full round in the cooling channel.

The combustion chamber 32 of the gasification compartment has a triple wall structure comprising an internal jacket 34, an intermediate jacket 36 and an external jacket 38. The triple wall provides a relatively cool outer surface of the external jacket 38. The internal jacket, which forms the innermost wall surface of the combustion chamber, is a cylindrical part having its upper edge on the level of the upper floor 16a and extending through the holes 30 in the upper and lower floor close to the bottom of the combustion chamber. The internal jacket is attached to the edges of the holes in the floors by welding, whereby it simultaneously forms one wall of the cooling channel 18. On the level of the lower edge of the internal jacket there is a round grate 40. The grate is supported on two support rings 42, which are attached by a pin joint to round rods, which are in turn attached to a support flange 45. The support flange rests on the intermediate jacket, which extends below the grate. This structure enables the detachment of both the grate and its structures. Through the central part of the grate runs a vertical axis 46, the first end of which extends above the grate and the second end of which extends through the wall of the combustion chamber to the outside of the gasifier. A winglike ash scraper 44 is attached to the first end of the axis. The axis can be rotated with an actuator (not shown in the figure), whereby the ash scraper rotates along the surface of the grate and ash drops through the grate. Ash removal from the grate can also be implemented so that the ash scraper is arranged in a fixed manner in the combustion chamber and the grate is attached at the end of a rotatable axis. Rotating the axis thus sets the grate in a rotating motion.

On the inner surface of the internal jacket, a little below the height level of the lower floor 16b, there is a horizontal, ring-like fire ring 50, which forms in the upper part of the combustion chamber a narrowing, which reduces its cross-section. The fire ring is a round, plate-like part with a hole in the middle. The fire ring is supported in its place in a way that enables thermal movement by attaching a lower support ring 52 to the inner wall of the internal jacket and on top of it an upper support ring 54 and by fitting the fire ring in the gap between the support rings.

Around the internal jacket there is an intermediate jacket 36, which forms a closed wall surface outside the cylindrical sidewall of the internal jacket and below the grate 40. The intermediate jacket turns inward at its upper edge and connects with the internal jacket a little above the fire ring. The intermediate jacket is preferably made of steel and attach at its upper edge to the internal jacket by welding. The purpose of the intermediate jacket is to function as a radiation heat insulator. Around the intermediate jacket there is an external jacket 38, which forms the outermost casing of the combustion chamber. A space surrounding the combustion chamber is formed between the external jacket and the intermediate jacket, which space functions as a preheating space for the gasification air. The upper surface of the preheating space is formed by the lower floor 16b.

In the wall of the cooling channel 18 there is an outlet opening 58 (Fig. 1d), to which the first end of the air pipe 64 is connected. The second end of the air pipe is led through a hole made in the external jacket to a space between the external jacket and the intermediate jacket below the grate. Through the outlet opening the gasification air can flow from the cooling channel into the air pipe 64 and along the air pipe further to the lower part of the preheating space (Fig. 1c). In the part between the lower floor and the upper edge of the intermediate jacket, the preheating space is limited by the internal jacket 34. This ring-like wall portion of the preheating space, limited by the internal jacket, is equipped with air nozzles 60, through which the gasification air is led from the preheating space to above the fire ring. Preferably there are six air nozzles.

A product gas pipe 62 leads from inside the combustion chamber to outside the gasifier. The first end of the product gas pipe attaches tangentially to the intermediate jacket 36 (Fig. 1e), running through the wall of the intermediate jacket. The second end of the product gas pipe is led via a hole passing through the external jacket 38 to outside the gasifier. At the through-hole of the external jacket and around the product gas pipe there is a flexible bellows seal 66, which ensures the tightness of the through-hole also when thermal movements occur. In a use situation, a starting exhauster is arranged at the second end of the product gas pipe (the starting exhauster is not shown in the figures), with the aid of which the gasification process is started. When the gasifier is connected to an engine, the running engine itself develops the suction of product gas required. When product gas is used as fuel in other applications, a separate exhauster is arranged at the end of the product gas pipe for the suction of the product gas.

The product gas exits the combustion chamber through the grate 40 to the space between the internal jacket and the intermediate jacket and from there along the product gas pipe further to the outside of the gasifier. The tangential attachment of the product gas pipe to the intermediate jacket generates a turbulent flow of product gas below the grate, lifting the ash generated in the combustion chamber with it. The ash exits the combustion chamber along with the product gas and it is separated from the product gas in a separate washer (the washer is not shown in the figures), where the product gas is purified also from other impurities. Separate ash removal equipment or a sweeping opening is thus not needed in the co-current gasifier according to the invention.

The co-current gasifier according to the invention further includes an ignition mechanism, by which the fuel to be gasified is ignited (the ignition mechanism is not shown in the figures). Various prior art ignition methods, which are not described in this connection in further detail, can be used in the gasifier. Preferably the ignition mechanism is an automatic, liquid gas operated or electrically operated mechanism.

The co-current gasifier according to the invention functions in the following manner. The lid 12 of the fuel silo 14 is opened and a suitable amount of fuel is dispensed into the fuel silo, whereby a part of the fuel flows into the combustion chambers 32. As fuel for the gasifier can be used pine, birch, fir, willow or other kinds of wood chipped with the bark. The wood chips may be air-dried, whereby their moisture content can be even 30-40 percent by weight. After dispensing the fuel, the lid is shut in an airtight manner. The co-current gasifier according to the invention can also be equipped with an automatic filling mechanism comprising a lock feeder, with which the fuel is fed into the fuel silo. Thus it is not necessary to open the lid of the fuel silo for the duration of the fuel feeding.

The exhauster connected to the product gas pipe is started and the fuel in the combustion chamber is ignited. Due to the underpressure achieved by the exhauster, gasification air flows into the cooling channel 18 through an inlet pipe 56 and an inlet opening 57 at the starting end of the channel. The gasification air moves from the cooling channel through the outlet opening 58 into the air pipe 64 and along the air pipe further into the preheating space between the intermediate jacket 36 and the external jacket 38, from where it is led through the air nozzles 60 above the fire ring 50 in the combustion chamber.

In a use situation of the co-current gasifier the fuel distributor 80 is rotated, whereby the wing 88 dispenses fuel through the holes 30 into the combustion chambers 32. The fuel is gasified in the combustion chamber at a high temperature of 1100-1300 °C. Since the temperature of the fuel in the fuel silo is low, pyrolysis does in practice not occur at all in the fuel silo. Drying of the fuel does also not significantly take place in the fuel silo, but the fuel is nearly at its original moisture state when arriving in the combustion chamber. The pyrolysis thus occurs during a very short distance between the upper floor 16a and the fire ring 50. In this area the temperature rises quickly from about 80 °C to 1100-1300 °C. In the co-current gasifier according to the invention the pyrolysis of the fuel takes place in a substantially higher temperature than in prior art co-current gasifiers. In addition, simultaneously with the pyrolysis, a large amount of water is evaporated from the damp fuel, which water assumably disintegrates into oxygen and water vapour in the high temperature. The hydrogen thus generated increases the hydrogen content of the product gas. Because of the extremely high temperature, the pyrolysis takes place in a clearly shorter time than in prior art solutions.

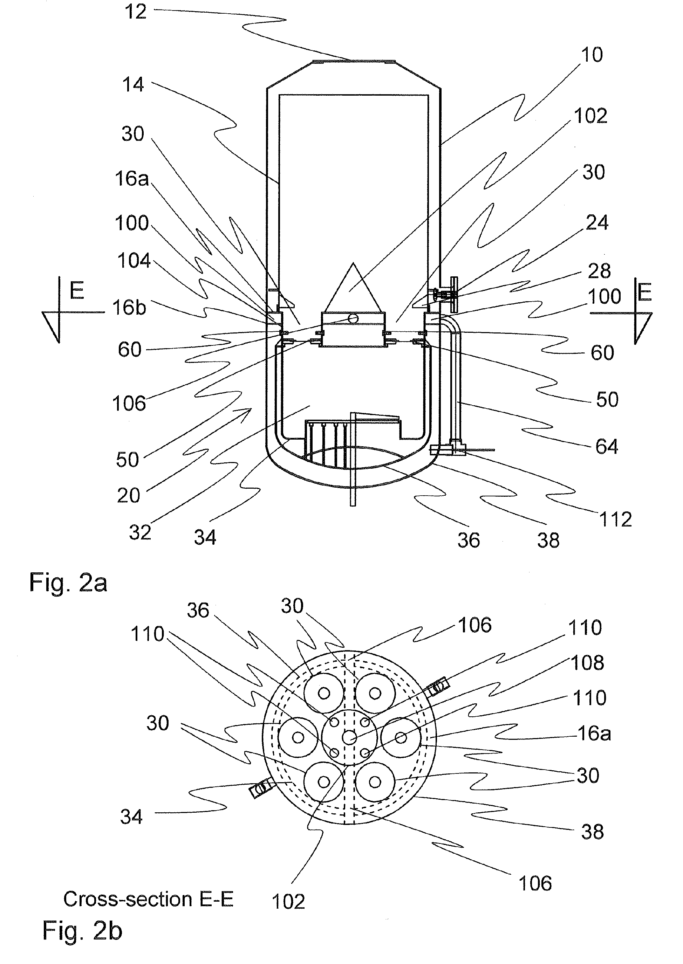

Figs. 2a and 2b show as an example a second preferred embodiment of the co-current gasifier according to the invention. Fig. 2a shows a vertical cross-section of a co-current gasifier and Fig. 2b a horizontal cross-section cut along sectional plane E-E. This preferred embodiment of the invention contains many of the same structural parts as in the above-described figures. The same names and the same reference numbers as above have been used for these parts in the description.

The gasifier has a cylindrical outer casing 10, the upwards pointing end of which has an airtight lid 12, which can be opened. Inside the outer casing there are two substantially parallel floors at a distance from each other, the upper floor 16a and the lower floor 16b, which limit the cooling space 100 between them. The outer casing of the gasifier forms the outer wall of the cooling space. The part below the cooling space forms the gasification compartment 20 of the co-current gasifier, where the actual gasification of the fuel occurs. Inside the outer casing, above the cooling space 100, there is a cylindrical fuel silo 14, which is open at its both ends, where the fuel to be gasified is dispensed via the lid 12, which can be opened. In a use situation the cooling channel 100 between the fuel silo and the gasification compartment functions as a structural part, which effectively reduces the transfer of heat from the gasification compartment to the fuel silo. The fuel silo is supported at its lower edge on bearings to a support collar on the top surface of the upper floor. In the wall of the outer casing 10 there is a fuel silo rotator 24, with the aid of which the fuel silo can be rotated around its longitudinal axis.

Inside the fuel silo, on the top surface of the upper floor, there is a cooling cone 102, the tip of which points toward the upper end of the fuel silo. The lower edge of the cooling cone is attached in a gastight manner to the upper floor 16a. In the upper floor there is in the middle of the area limited by the cooling cone an inlet hole 108 and four outlet holes 110 symmetrically around it (Fig. 2b). Two inlet channels 106 run inside the cooling space, the first ends of which channels open up outside the outer casing and the second ends of which connect to the inlet hole 108. Air can thus be conducted into the cooling cone from outside the gasifier along two inlet channels. From inside the cooling cone the air flows further through the outlet holes 110 into the cooling space 100.

The upper and lower floor has a number of holes 30, through which a connection opens from the fuel silo 14 to the gasification compartment. The holes are situated in a ring-like manner around the cooling cone. On the top surface of the upper floor there are catchers 28, which transfer the fuel in the fuel silo, which rotates along with the fuel silo, through the holes in the floors to the gasification compartment. In this preferred embodiment of the invention there is above the cooling space 100 a fuel silo and below the cooling space there is one gasification compartment 32. Several holes 30 lead through the cooling space, through which holes fuel is transferred from the fuel silo to the gasification compartment. In Figs. 2a and 2b there are six of these holes in each floor, but there can also be another number of them, for example 2, 3, 4, 5, 7, 8, 9, 10 or more than ten of them.

The gasification compartment according to this embodiment structurally corresponds to the gasification compartment described in Figs. 1c and 1d, i.e. it has a combustion chamber 32, which has a triple wall structure comprising an internal jacket 34, an intermediate jacket 36 and an external jacket 38. Between the holes 30 in the upper and the lower floor there is a cylindrical feeding pipe 104, the upper edge of which is on the level of the upper floor 16a and which extends through the holes 30 in the upper and lower floor to the gasification compartment. The walls of the feeding pipes together with the upper and lower floor and the outer casing 10 form the walls of the cooling space 100. On the inner surface of each feeding pipe 104 leading from the fuel silo to the combustion chamber, a little below the height level of the lower floor 16b, there is a horizontal, ring-like fire ring 50, which forms in the upper part of the combustion chamber a narrowing, which reduces its cross-section. A product gas pipe leads from inside the combustion chamber to outside the gasifier (the product gas pipe is not shown in the figure). The first end of the product gas pipe attaches tangentially to the intermediate jacket and its second end is led via a hole passing through the external jacket 38 to outside the gasifier in the manner shown in Fig. 2d.

In the outer casing 10 there is by the cooling space 100 a hole, whereto has been attached an air pipe 64. The second end of the air pipe is led through a hole made in the external jacket 38 to a space between the external jacket and the intermediate jacket below the grate. The air pipe has a lock valve 112, with the aid of which the flow of gasification air into the combustion chamber can be cut off if necessary. The gasification air, which has warmed up in the cooling space, can flow along the air pipe into the preheating space between the external jacket and the intermediate jacket. In the part between the lower floor and the upper edge of the intermediate jacket, the preheating space is limited by the wall of the feeding pipe 104. This wall portion is equipped with air nozzles 60, through which the gasification air is led from the preheating space to above the fire ring. Preferably each wall of the feeding pipe has six air nozzles.

In the preferred embodiment of the invention shown in Figs. 2a and 2b, the gasification air is first conducted into the cooling cone 102 and from there further through the cooling space 100 along the air pipe 64 into the gasification compartment. The cooling cone and the cooling space thus function as structural parts, which effectively limit the transfer of heat from the combustion chamber to the fuel silo. The fuel in the fuel silo thus remains as cool as possible, and no moisture can evaporate from it.

Some advantageous embodiments of the co-current gasifier according to the invention have been described above. The invention is not limited to the solutions described above, but the inventive idea can be applied in numerous ways within the scope of the claims. For example co-current gasifiers comprising several different gasification compartments can be realized also so that the gasification parts are in a line formation and the fuel silo above them has a rectangular cross-sectional shape.

## Claims

1. A co-current gasifier, which has a fuel silo (14) for storing fuel to be gasified, an upper floor (16a) forming the bottom of the fuel silo, at least one gasification compartment (20) beneath the upper floor for gasifying the fuel, which upper floor has several holes (30) for conducting the fuel from the fuel silo to the gasification compartment/gasification compartments (20) and means for conducting the gasification air into the gasification compartment, **characterized in that** the fuel silo is attached at its lower end in a fixed manner to the upper floor.

2. The co-current gasifier according to claim 1, **characterized in that** it comprises at least two gasification compartments (20) separate from each other and the upper floor (16a) has one hole (30) leading from the fuel silo (14) to the gasification compartment for each gasification compartment.

3. The co-current gasifier according to claim 2, **characterized in that** it comprises three, four, five or six gasification compartments (20), which are situated in a ring-like manner beneath the upper floor (16a).

4. The co-current gasifier according to any of the claims 1-3, **characterized in that** there is a ring-like cooling channel (18) between the gasification compartment (20) and the upper floor (16a) and that the gasification air is arranged to be conducted through the cooling channel to the gasification compartment.

5. The co-current gasifier according to any of the claims 2-4, **characterized in that** it further comprises a fuel distributor (80) or catcher (28) fitted into the fuel silo (14) for dispensing the fuel from the fuel silo through the holes (30) into the gasification compartments (20).

6. The co-current gasifier according to claim 5, **characterized in that** said fuel distributor (80) is shaped as a conical part, which has a wing (88), and the fuel distributor is installed on top of the upper floor (16a) and attached with the aid of a support axis (82) to the upper floor to rotate around its longitudinal axis.

7. The co-current gasifier according to any of the claims 1-6, **characterized in that** the gasification compartment (20) has a combustion chamber (32), which has a triple wall structure comprising an internal jacket 34, an intermediate jacket 36 and an external jacket 38.

## Patentansprüche

1. Gleichstromvergaser mit einem Brennstoffsilo (14) zum Speichern eines zu vergasenden Brennstoffs, einer oberen Decke (16a), die den Boden des Brennstoffsilos bildet, mindestens einer unter der oberen Decke angeordneten Vergasungskammer (20) zum Vergasen des Brennstoffs, wobei die obere Decke mehrere Öffnungen (30) zum Leiten des Brennstoffs vom Brennstoffsilo zur Vergasungskammer/zu den Vergasungskammern (20) aufweist, und mit einer Einrichtung zum Leiten von Vergasungsluft in die Vergasungskammer;
**dadurch gekennzeichnet, dass**
das Brennstoffsilo an seinem unteren Ende stabil an der oberen Decke befestigt ist.

2. Gleichstromvergaser nach Anspruch 1, **dadurch gekennzeichnet, dass** der Vergaser mindestens zwei voneinander getrennte Vergasungskammern (20) aufweist, und die obere Decke (16a) für jede Vergasungskammer eine vom Brennstoffsilo (14) zur Vergasungskammer führende Öffnung (30) aufweist.

3. Gleichstromvergaser nach Anspruch 2, **dadurch gekennzeichnet, dass** der Vergaser drei, vier, fünf oder sechs Vergasungskammern (20) aufweist, die auf eine ringförmige Weise unter der oberen Decke (16a) angeordnet sind.

4. Gleichstromvergaser nach einem der Ansprüche 1 bis 3, **dadurch gekennzeichnet, dass** sich ein ringförmiger Kühlkanal (18) zwischen der Vergasungskammer (20) und der oberen Decke (16a) erstreckt und die Vergasungsluft über den Kühlkanal in die Vergasungskammer eingeleitet wird.

5. Gleichstromvergaser nach einem der Ansprüche 2 bis 4, **dadurch gekennzeichnet, dass** der Vergaser ferner einen Brennstoffverteiler (80) oder - sammler (28) aufweist, der in das Brennstoffsilo (14) eingepasst ist, um Brennstoff vom Brennstoffsilo über die Öffnungen (30) in die Vergasungskammern (20) auszugeben.

6. Gleichstromvergaser nach Anspruch 5, **dadurch gekennzeichnet, dass** der Brennstoffverteiler (80) als ein kegelförmiges Teil ausgebildet ist, das einen Flügel (88) aufweist, und wobei der Brennstoffverteiler an der Oberseite der oberen Decke (16a) installiert und mit Hilfe einer Trägerachse (82) an der oberen Decke um seine Längsachse drehbar befestigt ist.

7. Gleichstromvergaser nach einem der Ansprüche 1 bis 6, **dadurch gekennzeichnet, dass** die Vergasungskammer (20) eine Brennkammer (32) aufweist, die eine dreiwandige Struktur mit einem inneren Mantel (34), einem Zwischenmantel (36) und einem äußeren Mantel (38) hat.

## Revendications

1. Gazéificateur à co-courant, qui a un silo de combustible (14) pour stocker le combustible à gazéifier, un plancher supérieur (16a) formant le fond du silo de combustible, au moins un compartiment de gazéification (20) au-dessous du plancher supérieur pour gazéifier le combustible, lequel plancher supérieur a plusieurs trous (30) pour amener le combustible du silo de combustible au compartiment de gazéification/aux compartiments de gazéification (20) et des moyens pour amener l'air de gazéification dans le compartiment de gazéification, **caractérisé en ce que** le silo de combustible est fixé au niveau de son extrémité inférieure, d'une manière fixe, au plancher supérieur.

2. Gazéificateur à co-courant selon la revendication 1, **caractérisé en ce qu'**il comprend au moins deux compartiments de gazéification (20) séparés l'un de l'autre et le plancher supérieur (16a) a un trou (30) allant du silo de combustible (14) au compartiment de gazéification, pour chaque compartiment de gazéification.

3. Gazéificateur à co-courant selon la revendication 2, **caractérisé en ce qu'**il comprend trois, quatre, cinq ou six compartiments de gazéification (20) qui sont situés, selon une forme annulaire, au-dessous du plancher supérieur (16a).

4. Gazéificateur à co-courant selon l'une quelconque des revendications 1 à 3, **caractérisé en ce qu'**il y a un canal de refroidissement de forme annulaire (18) entre le compartiment de gazéification (20) et le plancher supérieur (16a) et **en ce que** l'air de gazéification est agencé pour être amené par le canal de refroidissement, au compartiment de gazéification.

5. Gazéificateur à co-courant selon l'une quelconque des revendications 2 à 4, **caractérisé en ce qu'**il comprend en outre un distributeur de combustible (80) ou cavité de sortie (28) monté(e) dans le silo de combustible (14) pour distribuer le combustible du silo de combustible, en passant par les trous (30), dans les compartiments de gazéification (20).

6. Gazéificateur à co-courant selon la revendication 5, **caractérisé en ce que** ledit distributeur de combustible (80) est formé comme une partie conique, qui a une aile (88), et le distributeur de combustible est installé sur le dessus du plancher supérieur (16a) et fixé à l'aide d'un axe de support (82), au plancher supérieur pour tourner autour de son axe longitudinal.

7. Gazéificateur à co-courant selon l'une quelconque des revendications 1 à 6, **caractérisé en ce que** le compartiment de gazéification (20) a une chambre de combustion (32), qui a une structure à triple paroi comprenant une chemise interne (34), une chemise intermédiaire (36) et une chemise externe (38).
